# EUROPEAN PATENT APPLICATION

(11) **EP 4 163 717 A1**
(43) Date of publication of application: **12.04.2023**
(21) Application number: 21817944.8
(22) Date of filing: 04.06.2021
(51) Int. Cl.: G03B 13/36, G03B 17/12, H04N 5/225

(54) **CAMERA MODULE**

(30) Priority: 05.06.2020 KR 20200068329
(71) Applicant: LG Innotek Co., Ltd., Seoul 07796 (KR)
(72) Inventor: KIM, Kyung Won, Seoul 07796 (KR)
(74) Representative: DREISS Patentanwälte PartG mbB
(86) International application number: PCT/KR2021/007030
(87) International publication number: WO 2021/246826

(57) **Abstract**

An embodiment of the present invention relates to a camera module comprising: a housing; an optical system disposed in the housing; a substrate disposed under the optical system; and an imaging sensor disposed on the substrate; wherein the optical system comprises a first group lens, a second group lens, a third group lens, a fourth group lens, and a fifth group lens arranged in order, and when the third group lens moves, the effective focal length (EFL) of the optical system is changed.

## Description

### [Technical Field]

The teachings in accordance with exemplary and non-limiting embodiments of this invention generally relate to a camera module.

### [Background Art]

Concomitant with widely generalized dissemination of various portable terminals and commercialization of wireless Internet services, demands by consumers related to portable terminals are diversified to prompt use of various types of peripheral devices to be mounted on portable terminals. Camera modules may be one of the representative items capturing or photographing an object in a still picture or a video.

These days, camera modules mounted on portable terminals can perform auto focus (AF) and/or zooming functions by adjusting a focal distance (focal length) of a lens while moving the lens to an optical axis.

Meanwhile, for a zoom function in a camera module, the zoom function is performed by moving a plurality of lens groups to an optical axis using a lens driving device. These days, however, a disadvantage has arisen that the size of camera modules grow larger as a stroke of a lens is lengthened in order to embody the high-magnification zoom capability.

Furthermore, for the high-magnification zoom capability, portable terminals are these days mounted with 2 or 3 camera modules fixed with zoom magnification. In this case, another disadvantage has come up that video quality of obtained images has deteriorated when a zoom-in is performed with a magnification over a designated zoom magnification.

### [Detailed Description of the Invention]

### [Technical Subject]

The exemplary embodiments of the present invention are directed to cope with the abovementioned problems/disadvantages and it is an object of the present invention to provide a camera module configured to embody a high-magnification zoom capability and to simultaneously be minimized in size of the camera module.

Furthermore, it is an object of the present invention to provide a high-magnification zoom camera module minimized in decrease in video quality.

Still furthermore, it is an object of the present invention to provide a camera module configured to enable a free conversion of effective focal length of an entire lens through use of a dummy lens.

### [Technical Solution]

In one general aspect of the present invention, there may be provided a camera module, comprising: a housing; an optical system disposed in the housing; a substrate disposed under the optical system; and an imaging sensor disposed on the substrate; wherein the optical system comprises a first group lens, a second group lens, a third group lens, a fourth group lens, and a fifth group lens arranged in order, and when the third group lens moves, the effective focal length (EFL) of the optical system is changed.

Preferably, but not necessarily, the first group lens and the fifth group lens may be fixed, and the second group lens, the third group lens, and the fourth group lens may be movable toward an optical axis direction of the optical system.

Preferably, but not necessarily, the third group lens may be moved to a first direction approaching the second group lens, or moved to a second direction distancing from the second group lens, when the second group lens is moved to an optical axis direction of the lenses.

Preferably, but not necessarily, the optical system may include a first magnification and a second magnification, and when the optical system is the first magnification, the second group lens and the third group lens may be fixed and the fourth group lens may be moved along the optical axis of the optical system.

Preferably, but not necessarily, the optical system may include a first magnification and a second magnification, and when the optical system is the second magnification, the second group lens, the third group lens and the fourth group lens may be moved to the optical axis direction of the optical system.

Preferably, but not necessarily, the optical system may include a first magnification and a second magnification, and when the optical system is the second magnification, the number of pixels of image obtained from the image sensor may be constant as the magnification of the optical system increases.

Preferably, but not necessarily, only the fourth group lens may be moved when the optical system is a first magnification, and the second group lens, the third group lens and the fourth group lens may be moved when the optical system is the second magnification.

Preferably, but not necessarily, the second group lens may include a zoom lens, and the fourth group lens may include a focus lens.

Preferably, but not necessarily, a portable terminal according to an exemplary embodiment of the present invention may include the said camera module.

In another general aspect of the present invention, there may be provided a lens system, the system comprising: a first group lens; a second group lens; a third group lens; a fourth group lens; and a fifth group lens, wherein the system may comprise: a first state where the focus is adjusted by movement of the fourth group lens while magnification is fixed; and a second state where the magnification is changed in response to the second group lens being moved to an optical axis direction, after the third group lens moves to an optical axis direction.

Preferably, but not necessarily, the lens system may include a second state where a first effective focal length is changed to a second effective focal length in response to the third group lens being moved to an optical axis direction while the first state includes the first effective focal length.

Preferably, but not necessarily, the lens system may be such that the second effective focal length is changed in response to the movement of the second group lens under the second state.

### [Advantageous Effects]

The camera module according to an exemplary embodiment of the present invention has an advantageous effect in that a high-magnification zoom capability can be realized, and simultaneously the size of the camera module can be minimized.

Furthermore, the camera module according to an exemplary embodiment of the present invention has an advantageous effect in that a high-magnification zoom camera module minimized in decrease in video quality can be provided.

Still furthermore, the camera module according to an exemplary embodiment of the present invention has an advantageous effect in that a camera module capable of free conversion of effective focal length of an entire lens can be provided through use of a dummy lens.

### [Brief Description of Drawings]

FIG. 1 is a perspective view of a portable terminal device according to an exemplary embodiment of the present invention.
FIG. 2 is a perspective view of a camera module according to an exemplary embodiment of the present invention.
FIG. 3 is a schematic view illustrating a first magnification of an optical system of a camera module according to an exemplary embodiment of the present invention.
FIG. 4 is a schematic view illustrating a second magnification of an optical system of a camera module according to an exemplary embodiment of the present invention.
FIG. 5 is a block diagram of a driving unit of a camera module according to an exemplary embodiment of the present invention.
FIG. 6 is a graph illustrating a change of the number of pixels against the magnification of optical system of a camera module according to an exemplary embodiment of the present invention.

### [BEST MODE]

Hereinafter, exemplary embodiments of the present invention will be described in detail with reference to the accompanying drawings.

However, the technical ideas of the present invention are not limited to part of the exemplary embodiments that are explained but may be embodied by mutually different forms, and one or more elements among the exemplary embodiments may be used by being selectively coupled or substituted as long as within the technical scope of the present invention.

Unless otherwise defined, all terms (including technical or scientific terms) used herein have the same meaning as commonly understood by one of ordinary skill in the art to which the disclosure pertains. Terms, such as those defined in commonly used dictionaries, should be construed as having a meaning that is consistent with their meaning in the context of the relevant art and are not to be construed in an idealized or overly formal sense unless expressly so defined herein.

Furthermore, terms used in the exemplary embodiments of the present invention are intended to explain the exemplary embodiments and are not intended to limit the present invention.

As used herein, the singular forms "a," "an" and "the" are intended to include the plural forms as well, unless the context clearly indicates otherwise, and when a term is defined as at least one (or one or more) among "A and B, C, the term includes any and all combinations of one or more of the associated listed items.

Furthermore, in explaining elements of the exemplary embodiments of the present invention, the terms "first," "second," "A", "B", (a), (b) and the like may be used. These terms herein are rather simply used to distinguish one element from another and do not limit any essence, sequence or order of relevant elements based on the terms.

Furthermore, when an element is 'coupled', 'joined' or 'connected' to other element, "coupled", "joined" and "connected" may not only mean that two or more elements directly contact each other but may also mean that two or more elements are indirectly joined together via another element or intermediate elements

Furthermore, when elements are formed or arranged "above (upper)" or "beneath (below),", it will be understood that "above (upper)" or "beneath (below)," may include not only that two elements are mutually directly contacted but also include that one or more elements are formed or arranged between two or more elements. Furthermore, if the device in the figures is turned over, elements described as "above (upper)" or "beneath (below)," other elements, it would then be oriented "above" or "below" the other elements or features. Thus, the exemplary term "below" can encompass both an orientation of above and below.

Hereinafter, a portable terminal (1) according to an exemplary embodiment of the present invention will be described in detail with reference to the accompanying drawings.

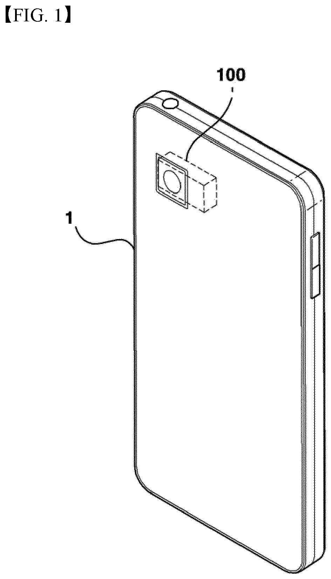

FIG. 1 is a perspective view of a portable terminal according to an exemplary embodiment of the present invention.

A portable terminal device (1) according to an exemplary embodiment of the present invention may be a portable electronic device such as a smart phone, a tablet PC, or a mobile communication terminal. The portable terminal device (1) may include a camera module (100). The camera module (100) may capture a subject. A length to an optical axis direction of camera module (100) may mean a length to a vertical direction relative to an optical path generated from the subject, and even if the camera module (100) includes at least any one function of the Auto focusing (AF), a Zoom and handshaking correction (Optical image stabilizer, OIS) therethrough, the thickness of the portable terminal device (10) can be minimized. As a result, the miniaturization of portable terminal device (10) can be implemented.

Hereinafter, the camera module (100) according to an exemplary embodiment of the present invention will be described in detail with reference to the accompanying drawings.

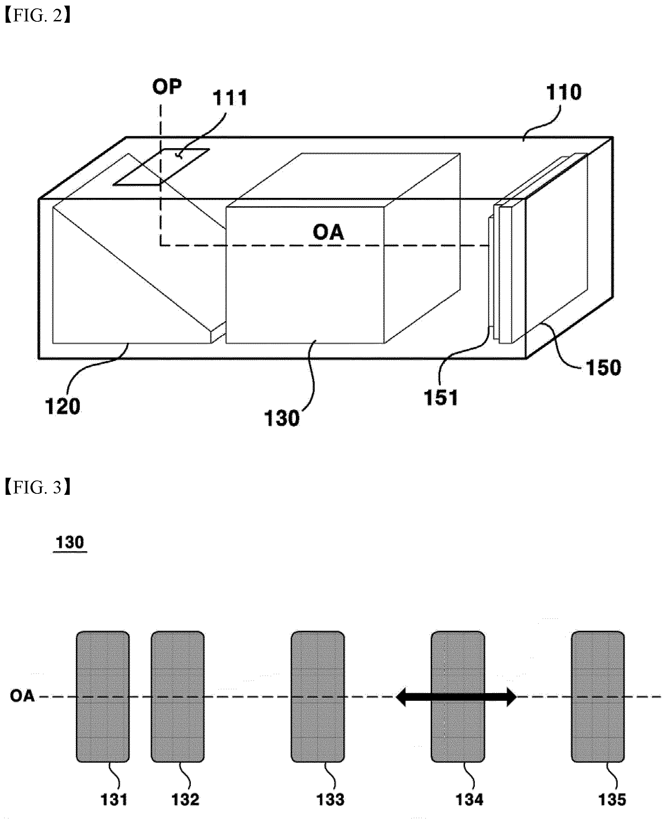

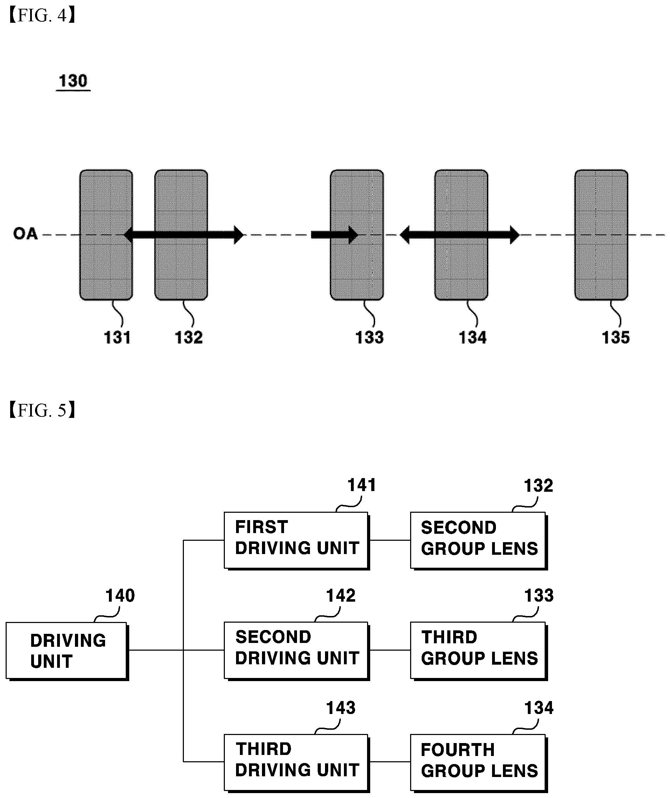

FIG. 2 is a perspective view of a camera module according to an exemplary embodiment of the present invention, FIG. 3 is a schematic view illustrating a first magnification of an optical system of a camera module according to an exemplary embodiment of the present invention, FIG. 4 is a schematic view illustrating a second magnification of an optical system of a camera module according to an exemplary embodiment of the present invention, and FIG. 5 is a block diagram of a driving unit of a camera module according to an exemplary embodiment of the present invention.

The camera module (100) according to an exemplary embodiment of the present invention may include a housing (110). The housing (110) may include an opening (111). The opening (111) may be an inlet through which a light is introduced. The opening (111) may be disposed on a reflective member (120, to be described later). The housing (110) may include therein a reflective member (120). The reflective member (120) may be disposed underneath the opening (111) of housing (110). The housing (110) may include therein an optical system (130). The housing (110) may include therein a substrate (150). The housing (110) may include therein an image sensor (151). The housing (110) may include therein a controller (140). The housing (110) may form an external shape of the camera module (100).

The camera module (100) according to an exemplary embodiment of the present invention may include a reflective member (120). The reflective member (120) may be disposed inside the housing (110). The reflective member (120) may be disposed in front of the optical system (130). The reflective member (120) may include a prism. The reflective member (120) may include a mirror. The reflective member (120) may include a slope. The slope of reflective member (120) may be formed by being inclined relative to a path of light generated from the subject. The slope of reflective member (120) may be slantly formed relative to an optical axis of optical system (130). The slope of reflective member (120) may be slantly formed at 45 degrees relative to a path of light generated from the subject. The slope of reflective member (120) may be slantly formed at 45 degrees relative to an optical axis of lens. The reflective member (120) may change an Optical path (OP) generated from a subject. The reflective member (120) may change the OP that has passed the opening (111) of housing (110). The reflective member (120) may change the OP that has passed the opening (111) of housing (110) to a direction perpendicular to a light progressing direction (OP). The reflective member (120) may change the OP that has passed the opening (111) of housing (110) to a direction parallel with an Optical Axis (OA) of the optical system (130). The OP generated from a subject may be changed by the slope of reflective member (120). The OP generated from the subject may be changed in its path by the slope of the reflective member (120) to a direction perpendicular to the OP. The light that has been changed in its path by the slope of reflective member (120) may be incident on the optical system (130).

The camera module (100) according to an exemplary embodiment of the present invention may include an optical system (130). The optical system (130) may be disposed inside the housing (110). The optical system (130) may be disposed behind the reflective member (120). The optical system (130) may be interposed between the reflective member (120) and a substrate (150). The optical system (130) may include a plurality of lenses. The optical system (130) may include a plurality of groups of lenses (hereinafter also referred to as 'group lens' for brevity). A central axis direction of optical system (130) may be parallel with the OA. The optical system (130) may include a first group lens (131), a second group lens (132), a third group lens (133), a fourth group lens (134), and a fifth group lens (135) arranged in order from a reflective member (130) to an image sensor (151).

The optical system (130) may include a lens barrel (not shown). The optical system (130) may be disposed inside the lens barrel. The optical system (130) may include a first group lens (131). The first group lens (131) may have refractive power. The first group lens (131) may have a positive (+) or negative (-) refractive power. The first group lens (131) may be formed with a plurality of lenses. The plurality of first group lens (131) may respectively have a refractive power. The plurality of first group lens (131) may respectively have a positive (+) or negative (-) refractive power. The first group lens (131) may be incident on with a path-changed light from the reflective member (120). The first group lens (131) may be spaced apart from the reflective member (120). The first group lens (131) may be spaced apart from the second group lens (132). The first group lens (131) may be a group of lenses first arranged from the reflective member (120). The first group lens (131) may be (131) may be interposed between the reflective member (120) and the second group lens (132).

The first group lens (131) may be fixed. The first group lens (131) may not be moved to an OA. The first group lens (131) may not be moved to a central axis direction of the optical system (130), through which a distance between the first group lens (131) and the fifth group lens (135) may be fixed. At this time, a distance between the first group lens (131) and the fifth group lens (135) may mean a distance on a central axis of the optical system (130) between the first group lens (131) and the fifth group lens (135). Furthermore, a distance between the first group lens (131) and the fifth group lens (135) may mean a distance on a central axis of the optical system (130) between a surface facing the reflective member (120) in the first group lens (131) and a surface facing an image forming surface of the image sensor (151) in the fifth group lens (135).

A distance to a central axis direction of optical system (130) may be fixed by the fixed position of first group lens (131). At this time, the distance to a central axis direction of optical system (130) may mean a distance between an upper surface of first group lens (131) and an image forming surface of image sensor (151) on the central axis of optical system (130), whereby a distance to an OA of camera module (100) can be minimized.

The optical system (130) may include a second group lens (132). The second group lens (132) may have a refractive power. The second group lens (132) may have a positive (+) or negative (-) refractive power. The second group lens (132) may be formed with a plurality of lenses. The plurality of second group lens (132) may respectively have a refractive power. The plurality of second group lens (132) may respectively have a positive (+) or negative (-) refractive power. The second group lens (132) may be incident on with a light that has passed the first group lens (131). The second group lens (132) may be spaced apart from the first group lens (131).

The second group lens (132) may be a lens group disposed second from the reflective member (120). The second group lens (132) may be interposed between the first group lens (131) and the third group lens (133).

The second group lens (132) may move along a central axis direction of optical system (130). The second group lens (132) may move to an OA. The second group lens may move between the first group lens (131) and the third group lens (133). The second group lens (132) may include a zoom lens performing a zooming role. The second group lens (132) may move along with the fourth group lens (134). In this case, the second group lens (132) may be a zoom lens and the fourth group lens (134) may be a focus lens.

The optical system (130) may include a third group lens (133). The third group lens (133) may have a 'O'refractive power. The third group lens (133) may have no refractive power. The third group lens (133) may have a refractive power. The third group lens (133) may have a positive (+) or negative (-) refractive power.

The third group lens (133) may be formed with a plurality of lenses. The plurality of third group lens (133) may respectively have a refractive power. The plurality of third group lens (133) may respectively have a positive (+) or negative (-) refractive power. The third group lens (133) may be incident on with a light that has passed the second group lens (132). The third group lens (133) may be spaced apart from the second group lens (132). The third group lens (133) may be spaced apart from the fourth group lens (134). The third group lens (133) may be a lens group disposed third from the reflective member (120). The third group lens (133) may be interposed between the second group lens (132) and the fourth group lens (134).

The third group lens (133) may move along a central axis direction of optical system (130). The third group lens (133) may move to an OA. The third group lens (133) may move between the second group lens (132) and the fourth group lens (134). The third group lens (133) may be a dummy lens. The dummy lens may mean an optical lens. The dummy lens may be formed with a glass material. The dummy lens may be formed with plastic material. The third group lens (133) may be a flat lens. The third group lens (133) may be a round symmetrical lens. The third group lens may not have a radius of curvature. The third group lens (133) may not have a refractive index. The third group lens (133) may not have Abbe's number. When the third group lens (133) moves, an Effective focal length (EFL) of optical system (130) may be changed. When the second group lens (132) moves to a central axis direction of the optical system (130), the third group lens (133) may move to a first direction approaching the central axis direction of the second group lens (132) or to a second direction distancing from the second group lens (132). In this case, the Effective Focal Length (EFL) of optical system (130) may be changed. When the third group lens (133) moves to the first direction, the EFL of optical system (130) may be increased. Conversely, when the third group lens (133) movers to the first direction, the EFL of optical system (130) may be decreased. When the third group lens (133) moves to the second direction, the EFL of optical system (130) may be increased. Conversely, the third group lens (133) moves to the second direction, the EFL of optical system (130) may be decreased. At this time, the fourth group lens (134) may move to any one direction of first direction or second direction in order to match the focus of the optical system (130).

When the third group lens (133) moves to the same direction as that of the second group lens (132), the EFL of optical system (130) may be increased. When the third group lens (133) moves to the first direction or the second direction along with the second group lens (132), the EFL of optical system (130) may be increased. Conversely, when the third group lens (133) moves to the same direction as that of the second group lens (132), the EFL of optical system (130) may be decreased.. When the third group lens (133) moves to the first direction or the second direction along with the second group lens (132), the EFL of optical system (130) may be decreased. At this time, the fourth group lens (134) may move to any one direction of the first direction or the second direction in order to match the focus of the optical system (130).

When the third group lens (133) moves to a different direction from that of the second group lens (132), the EFL of optical system (130) may be decreased. When the third group lens (133) is moved to a first direction, and the second group lens (132) is moved to a second direction, or the third group lens (133) is moved to a second direction, and the second group lens (132) is moved to a first direction, the EFL of optical system (130) may be increased. Conversely, when the third group lens (133) is moved to a direction different from that of the second group lens (132), the EFL of optical system (130) may be decreased. When the third group lens (133) is moved to a first direction, and the second group lens (132) is moved to a second direction, or the third group lens (133) is moved to the second direction, and the second group lens (132) is moved to the first direction, the EFL of optical system (130) may be decreased. At this time, the fourth group lens (134) may be moved to any one direction of the first and second directions in order to match the focus of the optical system (130).

When the EFL of optical system (130) increases, a focal length of optical system (130) may be lengthened. In this case, the optical system (130) may realize a tele-optical system. When the EFL of optical system (130) is decreased, the focal length of optical system (130) may be shortened. In this case, the optical system (130) may have a wide angle optical system.

When the third group lens (133) moves, the magnification of optical system (130) may be changed. When the third group lens (133) moves, the magnification of optical system (130) may be increased. When the third group lens (133) moves, the magnification of optical system (130) may be linearly increased or decreased. That is, the optical system (130) may linearly embody the zoom (linear zoom), whereby even if the magnification of optical system (130) increases, the deterioration phenomenon of pixels of image obtained by the image sensor (151) may be minimized.

The optical system (130) may include a fourth group lens (134). The fourth group lens (134) may have a refractive power. The fourth group lens (134) may have a positive (+) or negative (-) refractive power. The fourth group lens (134) may be formed with a plurality of lenses. Each of the plurality of lenses in the fourth group lens (134) may have a refractive power. Each of the plurality of lenses in the fourth group lens (134) may have a positive (+) or negative (-) refractive power. The fourth group lens (134) may be incident on by a light having passed the third group lens (133). The fourth group lens (134) may be spaced apart from the third group lens (133). The fourth group lens (134) may be spaced apart from the fifth group lens (135). The fourth group lens (134) may be a lens group arranged fourth from the reflective member (120). The fourth group lens (134) may be interposed between the third group lens (133) and the fifth group lens (135).

The fourth group lens (134) may move along a central axis direction of optical system (130). The fourth group lens (134) may move to the OA. The fourth group lens (134) may move between the third group lens (134) and the fifth group lens (135). The fourth group lens (134) may include a focus lens performing the focusing. The fourth group lens (134) may move along with the second group lens (132). In this case, the second group lens (132) may be a zoom lens, and the fourth group lens (134) may be a focus lens. In this case, the optical system (130) may have a second magnification. That is, the magnification of optical system (130) may be increased. The fourth group lens (134) may singly move while the second group lens (132) is fixed. In this case, the optical system (130) may have a first magnification.

The optical system (130) may include a fifth group lens (135). The fifth group lens (135) may have a refractive power. The fifth group lens (135) may have a positive (+) or negative (-) refractive power. The fifth group lens (135) may be formed with a plurality of lenses. Each of the lenses in the fifth group lens (135) may have a refractive power. Each of the lenses in the fifth group lens (135) may have a positive (+) or negative (-) refractive power. The fifth group lens (135) may be incident on by a light having passed the fourth group lens (134). The fifth group lens (135) may be spaced apart from the fourth group lens (134). The fifth group lens (135) may be spaced apart from the image sensor (151). The fifth group lens (135) may be a lens group arranged fifth from the reflective member (120). The fifth group lens (135) may be interposed between the fourth group lens (134) and the image sensor (151).

The fifth group lens (135) may be fixed. The fifth group lens (135) may not move to the OA. The fifth group lens (135) may not move to a central axis direction of the optical system (130), whereby a distance between the first group lens (131) and the fifth group lens (135) may be fixed. At this time, a distance between the first group lens (131) and the fifth group lens (135) may mean a distance on the central axis of the optical system (130) between the first group lens (131) and the fifth group lens (135). Furthermore, a distance between the first group lens (131) and the fifth group lens (135) may mean a distance on a central axis of the optical system (130) between a surface facing the reflective member (120) in the first group lens (131) and a surface facing an image forming surface of the image sensor (151) in the fifth group lens (135).

A distance to a central axis direction of optical system (130) may be fixed by fixation of position of fifth group lens (135). At this time, the distance to the central axis direction of optical system (130) may mean a distance on the central axis of optical system (130) from an upper surface of first group lens (131) to an image forming surface of image sensor (151), whereby a distance to the OA of camera module (100) can be minimized.

The optical system (130) may have a first magnification and a second magnification. The first magnification may be such that the second group lens and the third group lens are fixed and the fourth group lens is moved along a central axis of the optical system (130). The first magnification may be such that all group lenses except for the fourth group lens (134) in the first to fifth group lenses (131, 132, 133, 134, 135) are fixed. At this time, the fourth group lens (134) may be a focus lens. The first magnification may be such that only focus length can be changed while the zoom magnification is fixed. The first magnification may be such that only the focus length can be changed while a distance between a subject and the optical system (130) is constant. In this case, in order to correct the changed focus length, the fourth group lens (134) may be moved to a central axis direction of the optical system (130). The first magnification may be such that pixels of image obtained from the image sensor (151) are decreased as the zoom magnification is increased.

The second magnification may be such that the third group lens (133) moves along a central axis of optical system (130). The second magnification may be such that the second to fourth group lenses (132, 133, 134) may move along a central axis of optical system (130). The second magnification may not be fixed in its zoom magnification. The second magnification may change a distance between a subject and the optical system (130) by allowing the third group lens (133) to move to a first direction approaching the second group lens (132) or to a second direction distancing from the second group lens (132), whereby the second magnification may be free in transformation of zoom magnification. The second magnification may be such that the zoom magnification of optical system (130) is not fixed in response to the distance change between the second group lens (132) and the third group lens (133). In this case, the number of pixels of image obtained from the image sensor (151) may remain to be constant as the zoom magnification of optical system (130) increases. That is, the deterioration phenomenon of pixels of image obtained as the zoom magnification increases can be prevented.

Hereinafter, the zooming process of optical system (130) will be described with reference to the accompanying drawings.

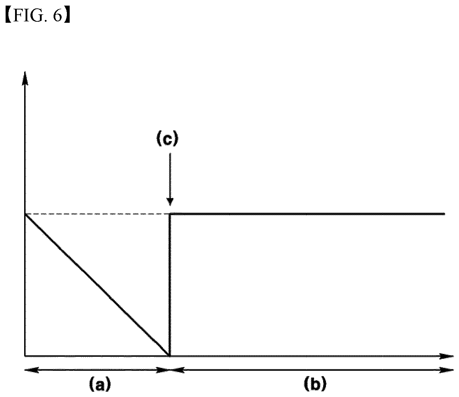

FIG. 6 is a graph illustrating a change of the number of pixels against the magnification of optical system of a camera module according to an exemplary embodiment of the present invention.

The horizontal axis (x axis) of FIG. 6 means a zoom magnification and the vertical axis (y axis) means the number of pixels of an image obtained from the image sensor (151), FIG. 6(a) means a first magnification section of the optical system (130), FIG. 6(b) means a second magnification section of the optical system (130), and FIG. 6(c) means a point from which the third group lens (133) starts to move.

Referring to FIG. 6, pixels of image may decrease as the zoom magnification increases in case of first magnification section (a). For example, the first magnification section is a low magnification relative to the second magnification section, and may mean a magnification section where it is difficult for a user to recognize the image quality deterioration of image in response to the magnification enlargement. The digital zoom may be realized in the first magnification section (a). At this time, the digital zoom means a zoom embodied by a method in which the image sensor (151) enlarges an image and the enlarged image is obtained. The digital zoom may be used even in a single focus lens that cannot change a focal length unlike an optical zoom. Furthermore, the digital zoom may show a part of the captured image by enlarging the same. In case of second magnification section (b), even if the zoom magnification is increased, the pixels of image remain to be constantly maintained. That is, the second magnification section (b) may mean a section where a positive user experience cannot be derived any more due to limited pixels of sensor.

For example, the first magnification section (a) and the second magnification section (b) may be divided based on a point (c) where the third group lens (133) starts to move from a first position to a second position. The third group lens (133) in the first magnification section (a) may be fixed on the first position. The EFL of optical system (130) in the second magnification section (b) may be changed by the third group lens (133) being fixed by movement from the first position to the second position. Thereafter, the continuous zoom may be realized in the optical system (130) based on the movement of the second group lens and the fourth group lens, whereby changes in the continuous magnification can be derived through one camera module without recourse to performance of transformation based on magnification change of a plurality of camera modules mounted on an electronic device.

The optical zoom may be realized in the second magnification section (b). The optical zoom means a method in which zoom is adjusted by allowing an optical lens to be moved to a first direction or to a second direction along an OA of the optical system to thereby adjust a focus. The optical zoom may be formed by combining a plurality of optical lenses, and a subject may be enlarged or reduced by a method of shrinking or lengthening a focal length of an optical system in response to the movement of optical lens. In this case, an image obtained by the optical zoom can be dispensed with the deterioration phenomenon of image quality being deteriorated even if the image is enlarged because a distance between an optical system and the subject is physically adjusted.

The camera module (100) according to an exemplary embodiment of the present invention may include one camera module. The camera module (100) may include one folded camera module. The conventional camera module may be a triple camera module including three (3) regular camera modules or a dual camera module including one regular camera module and one folded camera module. The conventional triple camera module has three (3) regular camera modules having mutually different zooms, and has disadvantage of degrading quality of an image when magnification increases in order to realize a zoom over a predetermined zoom. The conventional dual camera module also has disadvantage in that the quality of an image is degraded when a zoom over a predetermined magnification of zoom is to be realized in one regular camera module having a predetermined zoom, or when one regular camera module is converted to a folded camera module.

Whereas, the camera module (100) according to an exemplary embodiment of the present invention includes only one folded camera module, thereby enabling to perform the role of a triple camera module having three (3) regular camera modules depending on movement of the third group lens (133). To be more specific, the optical system (130) before the movement of the third group lens (133) of the camera module (100) according to an exemplary embodiment of the present invention may have the function of a first camera that performs any one role of the triple camera module and the dual camera module. The optical system (130) after the movement of the third group lens (133) of the camera module (100) may perform any one role of functions of the second and third cameras in the triple camera module and the folded camera module in the dual camera module.

The camera module according to an exemplary embodiment of the present invention may include a driving unit (140, not shown). The driving unit (140) may move the optical system (130) to the OA of the optical system (130). The driving unit (140) may move at least one of the plurality of optical systems (130) to the OA, whereby the camera module (100) may realize at least one or more of the auto focusing, zooming and handshake correction (OIS). The driving unit (140) may provide a driving power to move the optical system (130) to the OA. The driving unit (140) may include a coil (not shown) and a magnet (not shown). In this case, the lens can be moved by electromagnetic interaction between the coil and the magnet. The driving unit (140) may include a piezo motor (not shown). In this case, the driving unit (140) may include a piezoelectric element, an additional substate applying an electric power to the piezoelectric element, and a carbon pillar transmitting the vibration generated from the piezoelectric element. The driving unit (140) may be formed with a plural number.

The driving unit (140) may include a first driving unit (141). The first driving unit (141) may be disposed at the second group lens (132). The first driving unit (141) may move the second group lens (132) to the OA. The first driving unit (141) may perform the zooming by moving the second group lens (132) to the OA. The driving unit (140) may include a second driving unit (142). The second driving unit (142) may move the third group lens (133) to the OA. The second driving unit (142) may change the EFL of optical system (130) by moving the third group lens (133) to the OA. The driving unit (140) may include a third driving unit (143). The third driving unit (143) may move the fourth group lens (134) to the OA. The third driving unit (143) may perform the focusing by moving the fourth group lens (134) to the OA.

The camera module according to an exemplary embodiment of the present invention may include a substrate (150). The substrate (150) may be disposed inside the housing (110). Conversely, the substrate (150) may be disposed outside of the housing. The substrate (150) may be disposed at a side of the optical system (130). An image sensor (151) may be disposed on the substrate (150). The image sensor (151) may be disposed at a position corresponding to that of the optical system (130). The image sensor (151) may convert a light having passed the optical system (130) to an electrical signal.

Although the exemplary embodiment of the present invention has been described with the accompanying drawings, it will be apparent to those skilled in the art that the present invention may be implemented in other different forms without changing technical ideas or essential features. Thus, it should be understood that the abovementioned embodiments are exemplary in all respects and are not limiting.

## Claims

1. A camera module, comprising:
a housing;
an optical system disposed in the housing;
a substrate disposed under the optical system; and
an image sensor disposed on the substrate,
wherein the optical system comprises a first group lens, a second group lens, a third group lens, a fourth group lens, and a fifth group lens arranged in order, and when the third group lens moves, an effective focal length (EFL) of the optical system is changed.

2. The camera module of claim 1, wherein the first group lens and the fifth group lens are fixed, and the second group lens, the third group lens and the fourth group lens are movable toward an optical axis direction of the optical system.

3. The camera module of claim 1, wherein the third group lens is moved to a first direction approaching the second group lens, or moved to a second direction distancing from the second group lens, when the second group lens is moved to an optical axis direction of the lenses.

4. The camera module of claim 1, wherein the optical system includes a first magnification and a second magnification, and when the optical system is the first magnification, the second group lens and the third group lens are fixed, and the fourth group lens is moved along the optical axis of the optical system.

5. The camera module of claim 1, wherein the optical system includes a first magnification and a second magnification, and when the optical system is the second magnification, the second group lens, the third group lens and the fourth group lens are moved to the optical axis direction of the optical system.

6. The camera module of claim 1, wherein the optical system includes a first magnification and a second magnification, and when the optical system is the second magnification, the number of pixels of image obtained from the image sensor is constant as the magnification of the optical system increases.

7. The camera module of claim 1, wherein only the fourth group lens is moved when the optical system is a first magnification, and the second group lens, the third group lens and the fourth group lens are moved when the optical system is the second magnification.

8. A lens system, the lens system comprising:
a first group lens;
a second group lens;
a third group lens;
a fourth group lens; and
a fifth group lens,
wherein the system comprises a first state where the focus is adjusted by movement of the fourth group lens, while magnification is fixed and a second state where the magnification is changed in response to the second group lens being moved to an optical axis direction, after the third group lens moves to an optical axis direction.

9. The lens system of claim 8, comprising a second state where a first effective focal length is changed to a second effective focal length in response to the third group lens being moved to an optical axis direction, while the first state includes the first effective focal length.

10. The lens system of claim 9, wherein the second effective focal length is changed in response to the movement of the second group lens under the second state.
